# EUROPÄISCHE PATENTSCHRIFT

(11) **EP 3 208 656 B1**
(45) Veröffentlichungstag und Bekanntmachung des Hinweises auf die Patenterteilung: **01.08.2018**
(21) Anmeldenummer: 17156593.0
(22) Anmeldetag: 17.02.2017
(51) Int. Cl.: G03B 17/54, B60Q 1/00, B60Q 1/04, G03B 29/00, H04N 9/31

(54) **VERFAHREN ZUM BESTIMMEN EINER PROJEKTIONSFLÄCHE FÜR EINE PROJEKTIONSVORRICHTUNG EINES KRAFTFAHRZEUGS, PROJEKTIONSSYSTEM, SOWIE KRAFTFAHRZEUG**
METHOD FOR DETERMINING A PROJECTION SCREEN FOR A PROJECTION DEVICE OF A MOTOR VEHICLE, PROJECTION SYSTEM AND MOTOR VEHICLE
PROCÉDÉ DE DÉTERMINATION D'UNE SURFACE DE PROJECTION POUR UN PROJECTEUR D'UN VÉHICULE AUTOMOBILE, SYSTÈME DE PROJECTION ET VÉHICULE AUTOMOBILE

(30) Priorität: 20.02.2016 DE 102016002009
(43) Veröffentlichungstag der Anmeldung: 23.08.2017
(73) Patentinhaber: Audi AG, 85045 Ingolstadt (DE)
(72) Erfinder: Vargas Rivero, Jose Roberto, 86161 Augsburg (DE); Gut, Carsten, 88662 Überlingen (DE)

(56) Entgegenhaltungen:
- EP-A1- 2 740 632
- EP-A1- 2 896 937
- US-A1- 2002 107 069
- US-A1- 2014 085 470
- US-A1- 2015 228 195

## Beschreibung

Die vorliegende Erfindung betrifft ein Verfahren zum Bestimmen einer Projektionsfläche für eine Projektionsvorrichtung eines Kraftfahrzeugs. Darüber hinaus betrifft die vorliegende Erfindung ein Projektionssystem für ein Kraftfahrzeug. Ferner betrifft die Erfindung ein Kraftfahrzeug mit einem solchen Projektionssystem.

In modernen Kraftfahrzeugen werden zunehmend hochauflösende Frontscheinwerfer eingesetzt. Mit diesen Frontscheinwerfern, die beispielsweise mehrere Leuchtdioden oder Laserlichtquellen umfassen können, können unterschiedliche Lichtverteilungen bereitgestellt werden. Darüber hinaus sind diese Frontscheinwerfer dazu ausgebildet, Projektionsdaten beziehungsweise Informationen auf eine Oberfläche zu projizieren. Die Frontscheinwerfer stellen in diesem Fall eine Projektionsvorrichtung dar. Somit können beispielsweise Symbole auf die Fahrbahn projiziert werden, welche dem Fahrer Navigationshinweise bereitstellen. Es ist aber auch möglich, mit den Scheinwerfern Bilddaten und Videodaten auf die Fahrbahn oder eine Wand zu projizieren.

Wenn beispielsweise für den Fahrer des Kraftfahrzeugs eine entsprechende Projektion bereitgestellt werden soll, kann der Frontscheinwerfer in Abhängigkeit von der aktuellen Position des Fahrers angesteuert werden. Zu diesem Zweck kann beispielsweise die Augenposition mit Hilfe eines entsprechenden Sensors im Innenraum des Kraftfahrzeugs erfasst werden. Für den Fall, dass sich der Betrachter beziehungsweise der Fahrer außerhalb des Kraftfahrzeugs befindet, sind bisher keine Lösungen bekannt, die es dem Benutzer erlauben, eine Projektionsfläche auszuwählen beziehungsweise zu bestimmen.

Hierzu beschreibt die DE 10 2014 203 313 A1 eine Leuchteinrichtung für ein Kraftfahrzeug, die eine Lichtquelle und eine Reflektor umfasst. Dabei ist die Leuchteinrichtung derart ausgebildet, dass eine Fahrbahn mit einem Lichtmuster beleuchtet werden kann. Hierzu ist in Lichtaustrittsrichtung hinter dem Reflektor mindestens ein Leuchtmittel zur Erzeugung des Lichtmusters angeordnet.

Darüber hinaus beschreibt die US 2014/0028980 A1 ein Projektionssystem für Kraftfahrzeuge. Dieses Projektionssystem umfasst ein Kommunikationsmodul, welches dazu ausgelegt ist, Projektionsinhalte zu empfangen. Ferner ist ein Projektor vorgesehen, welcher an dem Kraftfahrzeug angeordnet ist und um den Projektionsinhalt auf eine von dem Kraftfahrzeug separate Projektionsfläche zu projizieren. Dabei kann es auch vorgesehen sein, dass die Orientierung des Projektors eingestellt wird, um den Inhalt auf eine gewünschte Projektionsfläche zu projizieren. Ferner kann das Projektionssystem eine Kamera aufweisen, mittels welcher die Erscheinung des projizierten Inhalts auf der Projektionsfläche erfasst werden kann. In Abhängigkeit von dem erfassten Inhalt kann dann der Projektor entsprechend angesteuert werden.

Ferner beschreibt die DE 10 2013 015 718 A1 ein Verfahren zur Überprüfung eines Leuchtmittels an einem Fahrzeug. Bei diesem Verfahren wird ein Handgerät außerhalb des Fahrzeugs in Richtung des zu überprüfenden Leuchtmittels positioniert. Ferner wird eine Information in Bezug auf das zu überprüfende Leuchtmittel über eine Funkschnittstelle empfangen. Des Weiteren wird ein Lichtsignal des Leuchtmittels am Fahrzeug erkannt und mit einem Referenzsignal verglichen.

Des Weiteren beschreibt die US 2015/0228195 A1 beschreibt ein Verfahren zum Erkennen zumindest einer Intention zum Durchführen einer Überquerung einer Fahrbahn von einem Objekt in der Nähe eines ersten Fahrzeugs. Dabei wird ferner ein zweites Fahrzeug in der Nähe der Überquerung erfasst. Ferner ist es vorgesehen, eine Signalisierung von einer ersten Einrichtung, die mit dem ersten Fahrzeug verbunden ist, zu einer zweiten Einrichtung, die mit dem zweiten Fahrzeug verbunden ist, zu bewirken, wobei die Signalisierung eine Synchronisation einer Bewegung, einem Stopp und/oder der Intention zum Durchführen der Überquerung bewirkt.

Ferner beschreiben die US 2014/0085470 A1, die EP 2 896 937 A1 und die EP 2 740 632 A1 Projektionssysteme für Fahrzeuge, mit denen eine Projektion in einer Umgebung des Fahrzeugs bereitgestellt werden kann.

Schließlich beschreibt die US 2002 / 0 107 069 A1 eine Spielmaschine, welche eine Steuereinheit eines Ziels aufweist, wobei das Ziel zumindest vier bekannte Punkte einschließt, welche eine Ebene definieren. Zudem umfasst die Spielmaschine einen Bildsensor, der eine Bildebene aufweist, auf welche die bekannten Punkte abgebildet werden können. Ferner ist ein Prozessor vorgesehen, der eine Lage der Bildebene relativ zur Ebene berechnet. Ferner umfasst die Spielmaschine einen Signalgenerator, der ein Signal zur Übertragung an die Steuereinrichtung generiert, welches eine Änderung in dem Ziel abhängig von der mit dem Prozessor berechneten Lage bewirkt.

Es ist Aufgabe der vorliegenden Erfindung, eine Lösung aufzuzeigen, wie eine Projektionsfläche für eine Projektionsvorrichtung eines Kraftfahrzeugs einfacher und zuverlässiger bestimmt werden kann.

Diese Aufgabe wird erfindungsgemäß durch ein Verfahren, durch ein Projektionssystem sowie durch ein Kraftfahrzeug gemäß den Merkmalen der jeweiligen unabhängigen Ansprüche gelöst. Vorteilhafte Weiterbildungen der vorliegenden Erfindung sind Gegenstand der abhängigen Ansprüche.

Ein erfindungsgemäßes Verfahren dient zum Bestimmen einer Projektionsfläche für eine Projektionsvorrichtung eines Kraftfahrzeugs. Das Verfahren umfasst das Erfassen eines mobilen Endgeräts in einer Umgebung des Kraftfahrzeugs. Darüber hinaus wird eine relative Lage zwischen dem mobilen Endgerät und einem Bezugspunkt des Kraftfahrzeugs mit einer Erfassungseinrichtung des Kraftfahrzeugs bestimmt. Des Weiteren wird die Projektionsfläche in der Umgebung des Kraftfahrzeugs mit dem mobilen Endgerät erfasst. Ferner wird eine relative Lage zwischen zumindest einem Punkt der Projektionsfläche und dem mobilen Endgerät bestimmt. Zudem wird eine relative Lage zwischen der Projektionsfläche und einem Bezugspunkt des Kraftfahrzeugs anhand der relativen Lage zwischen dem mobilen Endgerät und dem Bezugspunkt und der relativen Lage zwischen dem zumindest einen Punkt der Projektionsfläche und dem mobilen Endgerät bestimmt. Schließlich ist es vorgesehen, dass Projektionsdaten auf die Projektionsfläche mit der Projektionsvorrichtung in Abhängigkeit von der relativen Lage zwischen der Projektionsfläche und dem Bezugspunkt des Kraftfahrzeugs projiziert werden.

Mit Hilfe des Verfahrens kann eine Projektionsfläche ausgewählt werden, auf welche mit der Projektionsvorrichtung des Kraftfahrzeugs Projektionsdaten projiziert werden können. Bei der Projektionsvorrichtung des Kraftfahrzeugs handelt es sich insbesondere um zumindest einen Frontscheinwerfer des Kraftfahrzeugs. Dieser Frontscheinwerfer kann beispielsweise mehrere Leuchtdioden oder Laserlichtquellen aufweisen, die unabhängig voneinander angesteuert werden können. Mit dem Frontscheinwerfer kann insbesondere eine pixelbasierte Projektion bereitgestellt werden. Vorliegend soll die Projektionsfläche durch einen Nutzer, beispielsweise den Fahrer oder einen anderen Insassen des Kraftfahrzeugs, bestimmt werden. Zu diesem Zweck kann der Nutzer das mobile Endgerät in der Umgebung des Kraftfahrzeugs positionieren. Ein solches mobiles Endgerät kann beispielsweise ein Mobiltelefon, ein Smartphone oder ein Tablet sein. Mit der Erfassungseinrichtung des Kraftfahrzeugs kann dann die relative Lage zwischen dem mobilen Endgerät in der Umgebung des Kraftfahrzeugs und einem vorbestimmten Bezugspunkt des Kraftfahrzeugs ermittelt werden. Bei dem Bezugspunkt des Kraftfahrzeugs kann es sich beispielsweise um einen Mittelpunkt einer Vorderachse oder um den Mittelpunkt einer Hinterachse handeln. Mit dem mobilen Endgerät wird dann die Projektionsfläche erfasst, welche insbesondere von dem Nutzer ausgewählt wurde. Beispielsweise kann der Nutzer die Projektionsfläche zunächst auswählen und anschließend das mobile Endgerät derart betätigen, dass dieses die Projektionsfläche erfasst. Darüber hinaus wird die relative Lage zwischen zumindest einem Punkt der Projektionsfläche und dem Endgerät bestimmt.

Somit sind einerseits die relative Lage zwischen dem mobilen Endgerät und dem Bezugspunkt des Kraftfahrzeugs und andererseits die relative Lage zwischen dem mobilen Endgerät und einem Punkt der Projektionsfläche bekannt. Diese Informationen werden nun genutzt, um die relative Lage zwischen dem Bezugspunkt des Kraftfahrzeugs und dem Punkt der Projektionsfläche zu bestimmen. Insbesondere kann das Bestimmen der relativen Lage zwischen dem Bezugspunkt des Kraftfahrzeugs und der Projektionsfläche auf Grundlage von Triangulation erfolgen. Schließlich werden dann Projektionsdaten auf die Projektionsfläche in Abhängigkeit von der relativen Lage zwischen der Projektionsfläche und dem Bezugspunkt des Kraftfahrzeugs projiziert. Die Projektionsvorrichtung des Kraftfahrzeugs beziehungsweise der zumindest eine Scheinwerfer des Kraftfahrzeugs, welcher dazu ausgelegt ist, die Projektionsdaten auf die Projektionsfläche zu projizieren, werden also in Abhängigkeit von der relativen Lage zwischen der Projektionsfläche und dem Kraftfahrzeug angesteuert. Damit kann die Projektionsfläche in Abhängigkeit von der Position der Projektionsfläche, der Größe der Projektionsfläche und/oder der Neigung der Projektionsfläche zu dem Kraftfahrzeug beziehungsweise der Projektionsvorrichtung angepasst werden. Zudem wird einem Nutzer erstmals die Möglichkeit geboten, die Projektionsfläche direkt auszuwählen. Die Projektionsvorrichtung kann dann automatisch in Abhängigkeit von der relativen Lage zwischen dem Kraftfahrzeug und der Projektionsfläche angesteuert werden. Dies eignet sich insbesondere, wenn sich der Nutzer beziehungsweise der Fahrer außerhalb des Kraftfahrzeugs befinden.

Bevorzugt wird zum Bestimmen der relativen Lage zwischen dem mobilen Endgerät und dem Bezugspunkt des Kraftfahrzeugs das mobile Endgerät mit der Erfassungseinrichtung des Kraftfahrzeugs an einer ersten Position und an einer zweiten Position erfasst. Zudem werden ein Abstand zwischen der ersten Position und dem Bezugspunkt des Kraftfahrzeugs und ein Abstand zwischen der zweiten Position und dem Bezugspunkt des Kraftfahrzeugs bestimmt. Mit anderen Worten kann sich der Nutzer, welcher das mobile Endgerät hält, zunächst an der ersten Position außerhalb des Kraftfahrzeugs positionieren. Die Erfassungseinrichtung kann dann das mobile Endgerät an der ersten Position erkennen. Dabei kann es auch vorgesehen sein, dass mit dem Kraftfahrzeug beziehungsweise mit einem Projektionssystem des Kraftfahrzeugs eine Rückmeldung ausgegeben wird, falls das mobile Endgerät erkannt wurde. Beispielsweise können die Frontscheinwerfer des Kraftfahrzeugs aktiviert werden beziehungsweise aufblinken, um dem Nutzer zu signalisieren, dass das mobile Endgerät erkannt wurde. Mit der Erfassungseinrichtung wird auch ein erster Geräteabstand bestimmt, welcher den Abstand zwischen der ersten Position und dem Bezugspunkt des Kraftfahrzeugs beschreibt. Anschließend kann sich der Nutzer an der zweiten Position positionieren. Auch dort wird das mobile Endgerät analog zu der ersten Position erkannt und gegebenenfalls eine Rückmeldung ausgegeben. Ferner wird ein zweiter Geräteabstand, welcher den Abstand zwischen der zweiten Position und dem Bezugspunkt beschreibt, bestimmt. Auf Grundlage von Triangulation kann dann aus dem ersten Geräteabstand und dem zweiten Geräteabstand die relative Lage zwischen dem mobilen Endgerät und dem Bezugspunkt des Kraftfahrzeugs zuverlässig bestimmt werden.

Dabei ist es bevorzugt vorgesehen, dass zum Erfassen des mobilen Endgeräts ein vorbestimmtes Symbol auf einer Anzeigeeinrichtung des mobilen Endgeräts dargestellt wird und das dargestellte Symbol mit der Erfassungseinrichtung des Kraftfahrzeugs erfasst wird. Zu diesem Zweck kann beispielsweise auf dem mobilen Endgerät eine Applikation zum Ablauf gebracht werden und hierdurch das vorbestimmte Symbol auf der Anzeigeeinrichtung des mobilen Endgeräts dargestellt wird. Bei dem vorbestimmten Symbol kann es sich um eine geometrische Form, beispielsweise ein Kreuz, handeln. Das vorbestimmte Symbol wird insbesondere so dargestellt, dass es vorbestimmte Abmessungen auf der Anzeigeeinrichtung aufweist. Dieses dargestellte Symbol kann dann mit der Erfassungseinrichtung erkannt werden. Es kann auch vorgesehen sein, dass die jeweiligen Abstände zwischen den Positionen und dem Bezugspunkt auf Grundlage des Symbols bestimmt werden. Wenn es sich bei der Erfassungseinrichtung beispielsweise um einen optischen Sensor oder eine Kamera handelt, kann anhand einer Größe des erfassten Symbols der Abstand zwischen dem Bezugspunkt und dem mobilen Endgerät bestimmt werden. Dabei können beispielsweise die Abmessungen, mit denen das Symbol auf der Anzeigeeinrichtung des mobilen Endgeräts dargestellt wird, in der Erfassungseinrichtung des Kraftfahrzeugs hinterlegt sein. Somit kann die relative Lage zwischen dem mobilen Endgerät und dem Bezugspunkt auf einfache Weise bestimmt werden.

In einer weiteren Ausführungsform wird zum Bestimmen der relativen Lage zwischen dem zumindest einen Punkt der Projektionsflächen und dem mobilen Endgerät die Projektionsfläche mit dem mobilen Endgerät ausgehend von der ersten Position und ausgehend von der zweiten Position erfasst. Ferner wird ein Abstand zwischen der ersten Position und dem zumindest einen Punkt der Projektionsfläche und ein Abstand zwischen der zweiten Position und dem zumindest einen Punkt der Projektionsfläche bestimmt. Wenn sich das mobile Endgerät an der ersten Position befindet, wird der Abstand zwischen der ersten Position und zumindest einem Punkt der Projektionsfläche bestimmt. Bevorzugt wird der Abstand zwischen der ersten Position einerseits und mehreren Punkten der Bezugsfläche andererseits bestimmt. Dies wird in gleicher Weise für die zweite Position wiederholt. Ausgehend von der ersten Position kann ein erster Projektionsflächenabstand, welcher den Abstand zwischen der ersten Position und dem Punkt der Projektionsfläche beschreibt, und ein zweiter Projektionsflächenabstand, der den Abstand zwischen der zweiten Position und dem Punkt der Projektionsfläche beschreibt, bestimmt werden. Auf Grundlage von Triangulation kann dann anhand des ersten und des zweiten Projektionsflächenabstands die relative Lage zwischen dem mobilen Endgerät und der Projektionsfläche bestimmt werden. Dabei kann es vorgesehen sein, dass der jeweilige Projektionsflächenabstand mit dem mobilen Endgerät selbst bestimmt wird. Es kann auch vorgesehen sein, dass die Projektionsfläche beziehungsweise der Punkt der Projektionsfläche mit einer entsprechenden Sensoreinrichtung des mobilen Endgeräts erfasst wird und die Daten, die diesen Punkt der Projektionsfläche beschreiben, an das Projektionssystem des Kraftfahrzeugs übertragen werden und das Projektionssystem des Kraftfahrzeugs dann den jeweiligen Projektionsflächenabstand bestimmt.

Bevorzugt wird zum jeweiligen Erfassen der Projektionsfläche ausgehend von der ersten Position und ausgehend von der zweiten Position mit dem mobilen Endgerät ein Bild der Projektionsfläche aufgenommen. Das mobile Endgerät als die Sensoreinrichtung eine Kamera oder eine optischen Sensor umfassen. Mit dieser Kamera können dann ausgehend von der ersten Position und ausgehend von der zweiten Position jeweils ein Bild der ausgewählten Projektionsfläche aufgenommen werden. Auf Grundlage der jeweils erfassten Bilder kann dann jeweils der Projektionsflächenabstand bestimmt werden. Dies bringt den Vorteil mit sich, dass als mobiles Endgerät beispielsweise ein Smartphone oder ein Tablet verwendet werden können, welche eine Kamera umfassen.

Dabei ist es insbesondere vorgesehen, dass als der zumindest eine Punkt der Projektionsfläche eine Kante der Projektionsfläche in dem jeweiligen aufgenommenen Bild erkannt wird. Wie bereits erläutert, kann an der ersten Position und an der zweiten Position jeweils ein Bild von der Projektionsfläche mit dem mobilen Endgerät aufgenommen werden. Mit Hilfe eines entsprechenden Objekterkennungsalgorithmus beziehungsweise Algorithmus zur Kantenerkennung können dann die Kanten beziehungsweise Ecken der Projektionsfläche in den jeweiligen Bildern erkannt werden. Die Kanten können dann die Punkte der Projektionsfläche darstellen, zu welchen jeweils der Abstand ausgehend von der ersten Position und ausgehend von der zweiten Position bestimmt wird. Dabei ist es insbesondere vorgesehen, dass beispielsweise zu allen vier Kanten beziehungsweise Ecke der Projektionsfläche ein Abstand bestimmt wird. Damit kann die ausgewählte Projektionsfläche zuverlässig erfasst werden.

In einer weiteren Ausführungsform wird mit der Erfassungseinrichtung ein Reflexionsgrad der Projektionsfläche erfasst und das Projizieren der Projektionsdaten wird in Abhängigkeit von dem Reflexionsgrad angepasst. Mit der Erfassungseinrichtung, die bevorzugt als optischer Sensor oder als Kamera ausgebildet ist, können die Reflexionseigenschaften der Projektionsfläche erfasst werden. Es kann auch ein von der Erfassungseinrichtung verschiedener Sensor des Kraftfahrzeugs genutzt werden, um den Reflexionsgrad der Projektionsfläche zu bestimmen. Zudem kann die Oberflächenbeschaffenheit der Projektionsfläche erfasst werden. Es kann beispielsweise bestimmt werden, ob es sich um eine raue oder um eine glatte Oberfläche handelt. Zudem kann eine Krümmung der Projektionsfläche erfasst werden. In Abhängigkeit von dem erfassten Reflexionsgrad und/oder den weiteren erfassten Eigenschaften der Projektionsfläche kann dann die Projektionsvorrichtung des Kraftfahrzeugs angesteuert werden. Beispielsweise können die jeweiligen Pixel der Projektionsvorrichtung angesteuert werden. Wenn die Projektionsvorrichtung durch die beiden Frontscheinwerfer des Kraftfahrzeugs bereitgestellt wird, kann zudem bestimmt werden, ob die Projektionsdaten mit einem oder mit beiden Frontscheinwerfern bereitgestellt werden. Wenn die Projektionsfläche beispielsweise einen verhältnismäßig hohen Reflexionsgrad aufweist, kann es sinnvoll sein, die Projektionsdaten nur mit einem der Scheinwerfer bereitzustellen.

Weiterhin ist es vorteilhaft, wenn die Projektionsdaten von dem mobilen Endgerät an das Projektionssystem des Kraftfahrzeugs übertragen werden. Bei den Projektionsdaten kann es sich insbesondere um Bilddaten oder um Videodaten handeln, die beispielsweise auf einem Speicher des mobilen Endgeräts abgelegt sind. Diese Projektionsdaten können drahtlos von einem Sender des mobilen Endgeräts an einen Empfänger des Projektionssystems des Kraftfahrzeugs übertragen werden. Dies ermöglicht es dem Nutzer, Bild- oder Videodaten, die auf dem mobilen Endgerät gespeichert sind, auf die Projektionsfläche zu projizieren.

Ein erfindungsgemäßes Projektionssystem für ein Kraftfahrzeug umfasst eine Erfassungseinrichtung zum Erfassen eines mobilen Endgeräts in einer Umgebung des Kraftfahrzeugs. Zudem umfasst das Projektionssystem eine Empfangseinrichtung zum Empfangen von Projektionsflächendaten von dem mobilen Endgerät, wobei die Projektionsflächendaten eine relative Lage zwischen dem mobilen Endgerät und einer Projektionsfläche beschreiben. Des Weiteren umfasst das Projektionssystem eine Recheneinrichtung zum Bestimmen einer relativen Lage zwischen dem mobilen Endgerät und einem Bezugspunkt des Kraftfahrzeugs und zum Bestimmen einer relativen Lage zwischen der Projektionsfläche und dem Bezugspunkt des Kraftfahrzeugs anhand der relativen Lage zwischen dem mobilen Endgerät und dem Bezugspunkt und der relativen Lage zwischen dem zumindest einen Punkt der Projektionsfläche und dem mobilen Endgerät. Schließlich umfasst das Projektionssystem eine Projektionsvorrichtung zum Projizieren von Projektionsdaten auf die Projektionsfläche in Abhängigkeit von der relativen Lage zwischen der Projektionsfläche und dem Bezugspunkt des Kraftfahrzeugs.

Wie bereits erläutert, kann das Projektionssystem die Erfassungseinrichtung umfassen, welche zum Erkennen des mobilen Endgeräts in der Umgebung dient. Diese Erfassungseinrichtung kann ein optischer Sensor oder eine Kamera sein. Die Empfangseinrichtung des Projektionssystems kann zur Datenübertragung, insbesondere zur drahtlosen Datenübertragung, mit einer Sendeeinrichtung des mobilen Endgeräts verbunden sein. Somit können die Projektionsflächendaten von dem mobilen Endgerät an die Empfangseinrichtung und von dieser an die Recheneinrichtung des Projektionssystems übertragen werden. Die Projektionsflächendaten umfassen insbesondere den ersten Projektionsflächenabstand und den zweiten Projektionsflächenabstand. Mit der Recheneinrichtung kann dann die relative Lage zwischen dem Bezugspunkt und der Projektionsfläche bestimmt werden. Schließlich kann dann die Projektionsvorrichtung die Projektionsdaten auf die Projektionsfläche projizieren.

Ein erfindungsgemäßes Kraftfahrzeug umfasst ein erfindungsgemäßes Projektionssystem. Dabei ist die Projektionsvorrichtung des Projektionssystems bevorzugt durch zumindest einen Scheinwerfer des Kraftfahrzeugs bereitgestellt. Bei dem zumindest einen Scheinwerfer handelt es sich insbesondere um einen Frontscheinwerfer. Das Kraftfahrzeug ist insbesondere als Personenkraftwagen ausgebildet.

Ein mobiles Endgerät umfasst eine Sensoreinrichtung zum Erfassen einer Projektionsfläche. Zudem umfasst das mobile Endgerät eine Sendeeinrichtung zum Senden von Projektionsflächendaten, wobei die Projektionsflächendaten eine relative Lage zwischen dem mobilen Endgerät und der Projektionsfläche beschreiben. Bei dem mobilen Endgerät kann es sich insbesondere um ein Mobiltelefon, ein Smartphone, einen Tablet-Computer oder dergleichen handeln. Die Sensoreinrichtung kann insbesondere eine Kamera sein. Zudem kann das mobile Endgerät bevorzugt eine Anzeigeeinrichtung aufweisen, mit welcher das Symbol dargestellt werden kann. Auf dem mobilen Endgerät kann insbesondere eine Applikation zum Ablauf gebracht werden. Mit dieser Applikation kann das Symbol auf der Anzeigeeinrichtung des mobilen Endgeräts dargestellt werden. Zudem können mit der Applikation die Projektionsflächendaten an das Projektionssystem des Kraftfahrzeugs übertragen werden. Mit der Applikation können auch die Punkte der Projektionsfläche beziehungsweise die Kanten der Projektionsfläche in den Bildern erkannt werden, die mit der Sensoreinrichtung beziehungsweise der Kamera aufgenommen wurden.

Die mit Bezug auf das erfindungsgemäße Verfahren vorgestellten bevorzugten Ausführungsformen und deren Vorteile gelten entsprechend für das erfindungsgemäße Projektionssystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, der durch die Ansprüche definiert ist. Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Projektionssystem aufweist sowie ein mobiles Endgerät in der Umgebung des Kraftfahrzeugs; und
- Fig. 2: das Kraftfahrzeug gemäß Fig. 1, wobei mit einer Projektionsvorrichtung des Projektionssystems Projektionsdaten auf eine Projektionsfläche projiziert werden.

In den Figuren werden gleiche und funktionsgleiche Elemente mit den gleichen Bezugszeichen versehen.

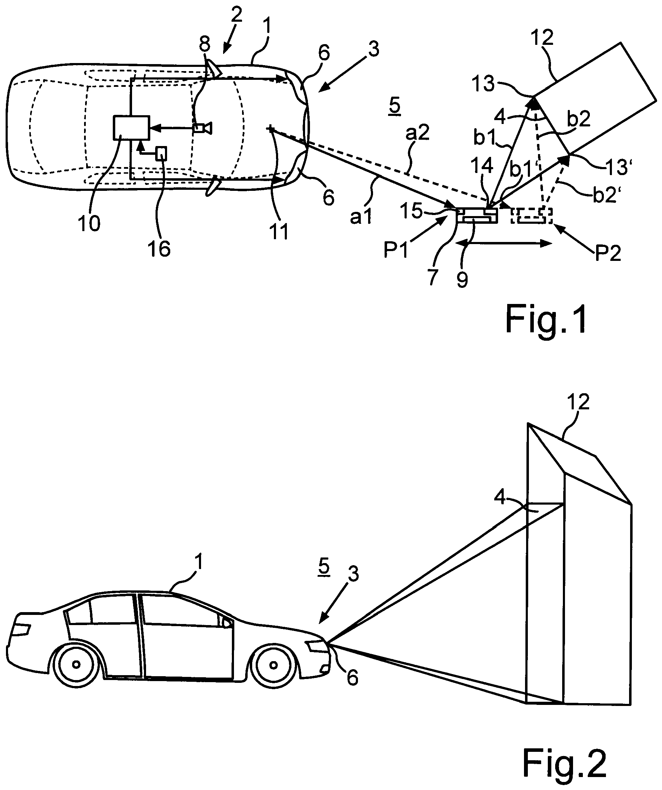

Fig. 1 zeigt ein Kraftfahrzeug 1 gemäß einer Ausführungsform der vorliegenden Erfindung in einer Draufsicht. Das Kraftfahrzeug 1 umfasst ein Projektionssystem 2. Das Projektionssystem 2 umfasst wiederum eine Projektionsvorrichtung 3. Mit Hilfe der Projektionsvorrichtung 3 können Projektionsdaten beziehungsweise Projektionsinhalte auf eine Projektionsfläche 4 in einer Umgebung 5 des Kraftfahrzeugs 1 projiziert werden. Bei der Projektionsfläche 4 kann es sich beispielsweise um eine Wand oder um eine Fahrbahn handeln, auf welcher sich das Kraftfahrzeug 1 bewegt. Die Projektionsfläche 4 ist vorliegend durch eine Fläche eines Objekts 12 beziehungsweise einen Teil der Fläche des Objekts 12 gebildet.

Die Projektionsvorrichtung 3 wird vorliegend durch die beiden Frontscheinwerfer 6 des Kraftfahrzeugs 1 beziehungsweise des Projektionssystems 2 gebildet. Bei den Scheinwerfern kann es sich insbesondere um hochauflösende und/oder pixelbasierte Scheinwerfer handeln. Die jeweiligen Scheinwerfer 6 beziehungsweise die Frontscheinwerfer können als Lichtquellen jeweils mehrere Leuchtdioden oder Laserlichtquellen aufweisen. Die Frontscheinwerfer können auch eine Ablenkeinrichtung zu Ablenken des jeweiligen Lichts der Lichtquellen aufweisen. Eine solche Ablenkeinrichtung kann ein Mikrospielgel oder ein Mikrospiegelarray sein. Mit den Scheinwerfern 6 kann eine Lichtverteilung, beispielsweise ein Abblendlicht, ein Fernlicht, ein Tagfahrlicht oder dergleichen bereitgestellt werden. Zudem können mit den Scheinwerfern Projektionsdaten auf die Projektionsfläche 4 projiziert werden.

In der Umgebung 5 des Kraftfahrzeugs 1 befindet sich ein mobiles Endgerät 7, welches beispielsweise ein Smartphone oder ein Tablet-Computer sein kann. Das mobile Endgerät 7 kann von einem hier nicht dargestellten Nutzer beziehungsweise einem Fahrer des Kraftfahrzeugs 1 gehalten werden. Mit Hilfe des mobilen Endgeräts 7 soll die Projektionsfläche 4 von dem Nutzer ausgewählt werden, auf welche dann die Projektionsdaten mit der Projektionsvorrichtung 3 beziehungsweise mit den Scheinwerfern 6 projiziert werden. Dazu ist es zunächst erforderlich, dass eine relative Lage zwischen dem Kraftfahrzeug 1 und der Projektionsfläche 4 bestimmt wird.

Zunächst positioniert sich der Nutzer mit dem mobilen Endgerät 7 an einer ersten Position P1 außerhalb des Kraftfahrzeugs 1. Mit Hilfe einer Erfassungseinrichtung 8 des Projektionssystems 2 kann das mobile Endgerät 7 an der ersten Position P1 erfasst werden. Bei der Erfassungseinrichtung 8 handelt es sich vorliegend um eine Kamera. Auf dem mobilen Endgerät 7 kann eine Applikation zum Ablauf gebracht werden, bei welcher ein vorbestimmtes Symbol auf einer Anzeigeeinrichtung 9 des mobilen Endgeräts 7 dargestellt wird. Dieses vorbestimmte Symbol kann mit Hilfe der Erfassungseinrichtung 8 erkannt werden. Falls das Symbol auf der Anzeigeeinrichtung 9 des mobilen Endgeräts7 erkannt wurde, kann mit der Erfassungseinrichtung 8 ein entsprechendes Signal an eine Recheneinrichtung 10 des Projektionssystems 2 übertragen werden. Infolgedessen kann die Recheneinrichtung 10 die Scheinwerfer 6 ansteuern, so dass diese aktiviert werden oder kurzzeitig aufblinken. Auf diese Weise kann dem Nutzer eine Rückmeldung ausgegeben werden, dass das mobile Endgerät 7 beziehungsweise das auf der Anzeigeeinrichtung 9 des mobilen Endgeräts 7 dargestellte Symbol erkannt wurde.

Zudem kann anhand der Größe des mit der Erfassungseinrichtung 8 erfassten Symbols ein erster Geräteabstand a1 bestimmt werden. Der erste Geräteabstand a1 beschreibt den Abstand zwischen dem mobilen Endgerät 7 und einem Bezugspunkt 11 des Kraftfahrzeugs 1. Vorliegend ist der Bezugspunkt 11 beispielhaft einem Mittelpunkt der Vorderachse des Kraftfahrzeugs 1 zugeordnet. Zum Bestimmen des ersten Geräteabstands a1 kann die Größe des mit der Erfassungseinrichtung 8 erfassten Symbols mit Referenzabmessungen verglichen werden, die beispielsweise die Größe des auf der Anzeigeeinrichtung 9 des mobilen Endgeräts 7 dargestellten Symbols beschreiben. Diese Referenzabmessungen können auf einem Speicher der Erfassungseinrichtung 8 oder der Recheneinrichtung 10 hinterlegt sein.

An der ersten Position P1 wird zudem die Projektionsfläche 4 beziehungsweise zumindest ein Punkt 13, 13' der Projektionsfläche 4 mit dem mobilen Endgerät 7 erfasst. Hierzu wird eine Sensoreinrichtung 14 des mobilen Endgeräts 7 genutzt, die vorliegend als Kamera ausgebildet ist. Zunächst ist es erforderlich, dass der Nutzer das mobile Endgerät 7 dreht, so dass er die von ihm gewählte Projektionsfläche 4 mit der Sensoreinrichtung 14 beziehungsweise der Kamera erfassen kann. Hierbei sollte die Höhe des mobilen Endgeräts 7 beibehalten bleiben und das mobile Endgerät 7 beispielsweise nur um die Hochachse gedreht werden. Damit der Nutzer dies beachtet, kann beispielsweise auf der Anzeigeeinrichtung 9 des mobilen Endgeräts 7 ein entsprechender Hinweis ausgegeben werden.

Sobald der Nutzer das mobile Endgerät 7 gedreht hat beziehungsweise zu der Projektionsfläche 4 ausgerichtet hat, kann er mit Hilfe der Sensoreinrichtung 14 beziehungsweise der Kamera ein Bild von der Projektionsfläche 4 aufnehmen. In dem Bild können die Kanten des Bildes als die Punkte 13, 13' erkannt werden. Hierzu kann ein entsprechender Algorithmus zur Kantenerkennung genutzt werden. Insbesondere ist es vorgesehen, dass alle vier Kanten der Projektionsfläche 4 als die Punkte 13, 13' erfasst werden. In der vorliegenden Draufsicht sind nur die beiden Punkte 13 und 13' dargestellt. Des Weiteren ist es vorgesehen, dass ein jeweiliger erster Projektionsflächenabstand b1, b1' zwischen dem ersten Punkt P1 und den Punkten 13, 13' bestimmt wird.

Im Anschluss daran wird das mobile Endgerät 7 durch den Nutzer an die zweite Position P2 bewegt. Dies ist vorliegenden durch den Pfeil dargestellt. Hierbei ist es nicht erforderlich, dass das mobile Endgerät 7 in derselben Höhe belassen wird. Auch an der zweiten Position P2 wird das mobile Endgerät 7 mit der Erfassungseinrichtung 8 erkannt und es wird ein zweiter Geräteabstand a2 zwischen dem Bezugspunkt 11 und der zweiten Position P2 bestimmt. Im Anschluss daran kann der Nutzer das mobile Endgerät 7 wieder entsprechend drehen und die Projektionsfläche 4 aufnehmen. Auch hier werden jeweilige Projektionsflächenabstände b2, b2' zwischen der zweiten Position P2 und den jeweiligen Punkten 13, 13' der Projektionsfläche 4 bestimmt.

Das mobile Endgerät 7 umfasst ferner eine Sendeeinrichtung 15, mittels welcher Projektionsflächendaten drahtlos an eine Empfangseinrichtung 16 drahtlos übertragen werden können. Die Projektionsflächendaten umfassen insbesondere die jeweiligen ersten Projektionsflächenabstände b1, b1' und die zweiten Projektionsflächenabstände b2, b2'. Diese Projektionsflächendaten werden von der Empfangseinrichtung 16 an die Recheneinrichtung 10 übertragen. Zudem werden der erste Geräteabstand a1 und der zweite Geräteabstand a2 von der Erfassungseinrichtung 8 an die Recheneinrichtung 10 übertragen. Die Recheneinrichtung 10 kann nun auf Grundlage von Triangulation anhand des ersten Geräteabstands a1, des zweiten Geräteabstands a2, der ersten Projektionsflächenabstände b1, b1' und der zweiten Projektionsflächenabstände b2, b2' die relative Lage zwischen dem Bezugspunkt 11 und der Projektionsfläche 4 beziehungsweise den Punkten 13, 13' der Projektionsfläche 4 bestimmen.

In Abhängigkeit von der relativen Lage zwischen dem Bezugspunkt 11 und der Projektionsfläche 4 können dann die Scheinwerfer 6 mit Hilfe der Recheneinrichtung 10 angesteuert werden, so dass diese die Projektionsdaten passend auf die Projektionsfläche 4 projizieren. Dies ist schematisch in Fig. 2 dargestellt. Dabei kann es auch vorgesehen sein, dass die Projektionsdaten auf dem mobilen Endgerät 7 hinterlegt sind. Die Projektionsdaten können insbesondere Bilddaten oder Videodaten sein. Diese können dann von der Sendeeinrichtung 15 an die Empfangseinrichtung 16 des Projektionssystems 2 übertragen werden und mit der Recheneinrichtung 10 so verarbeitet werden, dass diese dann mit Hilfe der Projektionsvorrichtung 3 auf die Projektionsfläche 4 projiziert werden. Dies ermöglicht dem Nutzer die Projektionsfläche 4 mit Hilfe des mobilen Endgeräts 7 zu bestimmen.

## Patentansprüche

1. Verfahren zum Bestimmen einer Projektionsfläche (4) für eine Projektionsvorrichtung (3) eines Kraftfahrzeugs (1) mit den Schritten:
- Erfassen eines mobilen Endgeräts (7) in einer Umgebung (5) des Kraftfahrzeugs (1),
- Bestimmen einer relativen Lage zwischen dem mobilen Endgerät (7) und einem Bezugspunkt (11) des Kraftfahrzeugs (1) mit einer Erfassungseinrichtung (8) des Kraftfahrzeugs (1),
- Erfassen der Projektionsfläche (4) in der Umgebung (5) des Kraftfahrzeugs (1) mit dem mobilen Endgerät (7),
- Bestimmen einer relativen Lage zwischen zumindest einem Punkt (13, 13') der Projektionsfläche (4) und dem mobilen Endgerät (7),
- Bestimmen einer relativen Lage zwischen der Projektionsfläche (4) und dem Bezugspunkt (11) des Kraftfahrzeugs (1) anhand der relativen Lage zwischen dem mobilen Endgerät (7) und dem Bezugspunkt (11) und der relativen Lage zwischen dem zumindest einen Punkt (13, 13') der Projektionsfläche (4) und dem mobilen Endgerät (7), und
- Projizieren vom Projektionsdaten auf die Projektionsfläche (4) mit der Projektionsvorrichtung (3) in Abhängigkeit von der relativen Lage zwischen der Projektionsfläche (4) und dem Bezugspunkt (11) des Kraftfahrzeugs (1).

2. Verfahren nach Anspruch 1,
**dadurch gekennzeichnet, dass**
zum Bestimmen der relativen Lage zwischen dem mobilen Endgerät (7) und dem Bezugspunkt (11) des Kraftfahrzeugs (1) das mobile Endgerät (7) mit der Erfassungseinrichtung (8) des Kraftfahrzeugs (1) an einer ersten Position (P1) und an einer zweiten Position (P2) erfasst wird sowie ein Abstand (a1) zwischen der ersten Position (P1) und dem Bezugspunkt (11) des Kraftfahrzeugs (1) und ein Abstand (a2) zwischen der zweiten Position (P2) und dem Bezugspunkt (11) des Kraftfahrzeugs (1) bestimmt werden.

3. Verfahren nach Anspruch 2,
**dadurch gekennzeichnet, dass**
zum Erfassen des mobilen Endgeräts (7) ein vorbestimmtes Symbol auf einer Anzeigeeinrichtung (9) des mobilen Endgeräts (7) dargestellt wird und das dargestellte Symbol mit der Erfassungseinrichtung (8) des Kraftfahrzeugs (1) erfasst wird.

4. Verfahren nach einem der Ansprüche 2 oder 3,
**dadurch gekennzeichnet, dass**
zum Bestimmen der relativen Lage zwischen dem zumindest einen Punkt (13, 13') der Projektionsfläche (4) und dem mobilen Endgerät (7) die Projektionsfläche (4) mit dem mobilen Endgerät (7) ausgehend von der ersten Position (P1) und ausgehend von der zweiten Position (P2) erfasst wird sowie ein Abstand (b1, b1') zwischen der ersten Position (P1) und dem zumindest einen Punkt (13, 13') der Projektionsfläche (4) und ein Abstand (b2, b2') zwischen der zweiten Position (P2) und dem zumindest einen Punkt (13, 13') der Projektionsfläche (4) bestimmt werden.

5. Verfahren nach Anspruch 4,
**dadurch gekennzeichnet, dass**
zum jeweiligen Erfassen der Projektionsfläche (4) ausgehend von der ersten Position (P1) und ausgehend von der zweiten Position (P2) mit dem mobilen Endgerät (7) ein Bild der Projektionsfläche (4) aufgenommen wird.

6. Verfahren nach Anspruch 5,
**dadurch gekennzeichnet, dass**
als der zumindest eine Punkt (13, 13') der Projektionsfläche (4) eine Kante der Projektionsfläche (4) in dem jeweiligen aufgenommenen Bild erkannt wird.

7. Verfahren nach einem der vorhergehenden Ansprüche,
**dadurch gekennzeichnet, dass**
mit der Erfassungseinrichtung (8) ein Reflexionsgrad der Projektionsfläche (4) erfasst wird und das Projizieren der Projektionsdaten in Abhängigkeit von dem Reflexionsgrad angepasst wird.

8. Projektionssystem (2) für ein Kraftfahrzeug (1), mit
- einer Erfassungseinrichtung (8) eingerichtet zum Erfassen eines mobilen Endgeräts (7) in einer Umgebung (5) des Kraftfahrzeugs (1),
- einer Empfangseinrichtung (16) eingerichtet zum Empfangen von Projektionsflächendaten von dem mobilen Endgerät (7), wobei die Projektionsflächendaten eine relative Lage zwischen dem mobilen Endgerät (7) und zumindest einem Punkt (13, 13') einer Projektionsfläche (4) beschreiben,
- einer Recheneinrichtung (10) eingerichtet zum Bestimmen einer relativen Lage zwischen dem mobilen Endgerät (7) und einem Bezugspunkt (11) des Kraftfahrzeugs (1) sowie zum Bestimmen einer relativen Lage zwischen der Projektionsfläche (4) und dem Bezugspunkt (11) des Kraftfahrzeugs (1) anhand der relativen Lage zwischen dem mobilen Endgerät (7) und dem Bezugspunkt (11) und der relativen Lage zwischen dem zumindest einen Punkt (13, 13') der Projektionsfläche (4) und dem mobilen Endgerät (7), und
- einer Projektionsvorrichtung (3) eingerichtet zum Projizieren von Projektionsdaten auf die Projektionsfläche (4) in Abhängigkeit von der relativen Lage zwischen der Projektionsfläche (4) und dem Bezugspunkt (11) des Kraftfahrzeugs (1).

9. Kraftfahrzeug (1) mit einem Projektionssystem (2) nach Anspruch 8, wobei die Projektionsvorrichtung (3) des Projektionssystems (2) durch zumindest einen Scheinwerfer (6) des Kraftfahrzeugs (1) bereitgestellt ist.

## Claims

1. Method for determining a projection screen (4) for a projection device (3) of a motor vehicle (1) with the steps:
- detection of a mobile terminal (7) in surroundings (5) of the motor vehicle (1),
- determination of a relative position between the mobile terminal (7) and a reference point (11) of the motor vehicle (1) with a detection device (8) of the motor vehicle (1),
- detection of the projection screen (4) in the surroundings (5) of the motor vehicle (1) with the mobile terminal (7),
- determination of a relative position between at least one point (13, 13') of the projection screen (4) and the mobile terminal (7),
- determination of a relative position between the projection screen (4) and the reference point (11) of the motor vehicle (1) on the basis of the relative position between the mobile terminal (7) and the reference point (11) and the relative position between the at least one point (13, 13') of the projection screen (4) and the mobile terminal (7), and
- projection of projection data onto the projection screen (4) with the projection device (3) subject to the relative position between the projection screen (4) and the reference point (11) of the motor vehicle (1).

2. Method according to claim 1, **characterised in that**, for determination of the relative position between the mobile terminal (7) and the reference point (11) of the motor vehicle (1), the mobile terminal (7) is detected with the detection device (8) of the motor vehicle (1) in a first position (P1) and in a second position (P2) and also a distance (a1) between the first position (P1) and the reference point (11) of the motor vehicle (1) and a distance (a2) between the second position (P2) and the reference point (11) of the motor vehicle (1) are determined.

3. Method according to claim 2, **characterised in that**, for detection of the mobile terminal (7), a predetermined symbol is represented on a display device (9) of the mobile terminal (7) and the symbol represented is detected with the detection device (8) of the motor vehicle (1).

4. Method according to any one of claims 2 or 3, **characterised in that**, for determination of the relative position between the at least one point (13, 13') of the projection screen (4) and the mobile terminal (7), the projection screen (4) is detected with the mobile terminal (7) starting out from the first position (P1) and starting out from the second position (P2) and also a distance (b1, b1') between the first position (P1) and the at least one point (13, 13') of the projection screen (4) and a distance (b2, b2') between the second position (P2) and the at least one point (13, 13') of the projection screen (4) are determined.

5. Method according to claim 4, **characterised in that**, for the particular detection of the projection screen (4) starting out from the first position (P1) and starting out from the second position (P2) with the mobile terminal (7), an image of the projection screen (4) is captured.

6. Method according to claim 5, **characterised in that** an edge of the projection screen (4) in the particular image captured is identified as the at least one point (13, 13') of the projection screen (4).

7. Method according to any one of the preceding claims, **characterised in that** a reflection factor of the projection screen (4) is detected with the detection device (8) and the projection of the projection data is adapted subject to the reflection factor.

8. Projection system (2) for a motor vehicle (1), with
- a detection device (8) configured to detect a mobile terminal (7) in surroundings (5) of the motor vehicle (1),
- a receiver device (16) configured to receive projection screen data from the mobile terminal (7), wherein the projection screen data describe a relative position between the mobile terminal (7) and at least one point (13, 13') of a projection screen (4),
- a computing device (10) configured to determine a relative position between the mobile terminal (7) and a reference point (11) of the motor vehicle (1) and also to determine a relative position between the projection screen (4) and the reference point (11) of the motor vehicle (1) on the basis of the relative position between the mobile terminal (7) and the reference point (11) and the relative position between the at least one point (13, 13') of the projection screen (4) and the mobile terminal (7), and
- a projection device (3) configured to project projection data onto the projection screen (4) subject to the relative position between the projection screen (4) and the reference point (11) of the motor vehicle (1).

9. Motor vehicle (1) with a projection system (2) according to claim 8, wherein the projection device (3) of the projection system (2) is provided by at least one headlight (6) of the motor vehicle (1).

## Revendications

1. Procédé servant à déterminer une surface de projection (4) pour un dispositif de projection (3) d'un véhicule automobile (1), avec les étapes :
- de détection d'un terminal mobile (7) dans un environnement (5) du véhicule automobile (1),
- de définition d'une position relative entre le terminal mobile (7) et un point de référence (11) du véhicule automobile (1) avec un système de détection (8) du véhicule automobile (1),
- de détection de la surface de projection (4) dans l'environnement (5) du véhicule automobile (1) avec le terminal mobile (7),
- de définition d'une position relative entre au moins un point (13, 13') de la surface de projection (4) et le terminal mobile (7),
- de définition d'une position relative entre la surface de projection (4) et le point de référence (11) du véhicule automobile (1) à l'aide de la position relative entre le terminal mobile (7) et le point de référence (11) et la position relative entre l'au moins un point (13, 13') de la surface de projection (4) et le terminal mobile (7), et
- de projection de données de projection sur la surface de projection (4) avec le dispositif de projection (3) en fonction de la position relative entre la surface de projection (4) et le point de référence (11) du véhicule automobile (1).

2. Procédé selon la revendication 1,
**caractérisé en ce que**
pour définir la position relative entre le terminal mobile (7) et le point de référence (11) du véhicule automobile (1), le terminal mobile (7) est détecté avec le système de détection (8) du véhicule automobile (1) au niveau d'une première position (P1) et au niveau d'une deuxième position (P2) ainsi qu'une distance (a1) entre la première position (P1) et le point de référence (11) du véhicule automobile (1) et une distance (a2) entre la deuxième position (P2) et le point de référence (11) du véhicule automobile (1) sont définies.

3. Procédé selon la revendication 2,
**caractérisé en ce que**
pour détecter le terminal mobile (7), un symbole prédéfini est représenté sur un système d'affichage (9) du terminal mobile (7) et le symbole représenté est détecté avec le système de détection (8) du véhicule automobile (1).

4. Procédé selon l'une quelconque des revendications 2 ou 3,
**caractérisé en ce que**
pour définir la position relative entre l'au moins un point (13, 13') de la surface de projection (4) et le terminal mobile (7), la surface de projection (4) est détectée avec le terminal mobile (7) en partant de la première position (P1) et en partant de la deuxième position (P2) ainsi qu'une distance (b1, b1') entre la première position (P1) et l'au moins un point (13, 13') de la surface de projection (4) et une distance (b2, b2') entre la deuxième position (P2) et l'au moins un point (13, 13') de la surface de projection (4) sont définies.

5. Procédé selon la revendication 4,
**caractérisé en ce que**
pour détecter de manière respective la surface de projection (4) en partant de la première position (P1) et en partant de la deuxième position (P2) avec le terminal mobile (7), une image de la surface de projection (4) est prise.

6. Procédé selon la revendication 5,
**caractérisé en ce que**
une arête de la surface de projection (4) est identifiée sur l'image respectivement prise en tant que l'au moins un point (13, 13') de la surface de projection (4).

7. Procédé selon l'une quelconque des revendications précédentes,
**caractérisé en ce que**
un degré de réflexion de la surface de projection (4) est détecté avec le système de détection (8), et la projection des données de projection est adaptée en fonction du degré de réflexion.

8. Système de projection (2) pour un véhicule automobile (1), avec
- un système de détection (8) mis au point pour détecter un terminal mobile (7) dans un environnement (5) du véhicule automobile (1),
- un système de réception (16) mis au point pour recevoir des données de surface de projection par le terminal mobile (7), dans lequel les données de surface de projection décrivent une position relative entre le terminal mobile (7) et au moins un point (13, 13') d'une surface de projection (4),
- un système de calcul (10) mis au point pour définir une position relative entre le terminal mobile (7) et un point de référence (11) du véhicule automobile (1) ainsi que pour définir une position relative entre la surface de projection (4) et le point de référence (11) du véhicule automobile (1) à l'aide de la position relative entre le terminal mobile (7) et le point de référence (11) et la position relative entre l'au moins un point (13, 13') de la surface de projection (4) et le terminal mobile (7), et
- un dispositif de projection (3) mis au point pour projeter des données de projection sur la surface de projection (4) en fonction de la position relative entre la surface de projection (4) et le point de référence (11) du véhicule automobile (1).

9. Véhicule automobile (1) avec un système de projection (2) selon la revendication 8, dans lequel le dispositif de projection (3) du système de projection (2) est fourni par au moins un projecteur (6) du véhicule automobile (1).
